# FASCICULE DE BREVET EUROPEEN

(11) **EP 0 404 622 B1**
(45) Date de publication et mention de la délivrance du brevet: **28.07.1993**
(21) Numéro de dépôt: 90401489.1
(22) Date de dépôt: 01.06.1990
(51) Int. Cl.: B60J 1/02, E06B 3/54

(54) **Dispositif de positionnement ajustable pour vitrage de véhicule automobile**
Einstellbare Verstellvorrichtung für ein Kraftfahrzeugfenster
Adjustable positioning device for vehicle window

(30) Priorité: 23.06.1989 FR 8908373
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR)
(72) Inventeur: Saulnier, Jacques, F-25150 Pont de Roide (FR)
(74) Mandataire: Seytre, Françoise

(56) Documents cités:
- US-A- 3 836 118

## Description

L'invention est relative à un dispositif de positionnement d'un vitrage de véhicule automobile notamment assemblé par collage.

La fixation par collage d'un vitrage, par exemple un pare-brise, sur la caisse d'un véhicule automobile se fait à l'aide d'un cordon d'adhésif déposé sur le pourtour extérieur de la baie, entre la tôle et le vitrage. Ce cordon de colle a une durée de polymérisation plus ou moins longue durant laquelle il est nécessaire de maintenir fermement le vitrage en place pour éviter un déplacement intempestif, notamment dans le sens vertical, ce qui détruirait le parfait parallélisme de son bord supérieur par rapport au rebord du pavillon. A cet effet, on utilise des cales placées sous le vitrage et prenant appui sur un élément de caisse. Afin de rattraper les dispersions de la tôlerie sur les dimensions de la baie il est nécessaire de disposer, soit d'un jeu de cales adaptables en fonction de l'écart existant entre la paroi de référence et le bord du vitrage, soit d'une cale dont la position peut être ajustée en fonction de cet écart. Le document US-A-3 836 118 décrit une cale de ce type, conforme au préambule de la revendication 1.

La cale selon l'invention est ajustable dans une large gamme de tolérance et assure au vitrage un appui résistant mais suffisamment souple pour éviter tout risque de bris. Ladite cale permet aussi l'utilisation d'une paroi de référence faisant un angle quelconque avec la surface de la vitre ainsi qu'un positionnement précis en profondeur de celle-ci. De plus sa fixation ne nécessite aucun perçage de la tôle et elle peut être démontée après collage définitif du vitrage ou rester en place pour être utilisée au cas où celui-ci devrait être remplacé.

Pour ce faire, l'invention propose un dispositif de positionnement ajustable d'un vitrage dans une baie de véhicule automobile du type destiné à être appliqué contre le bord inférieur dudit vitrage pour exercer une poussée tendant à maintenir le bord supérieur de celui-ci parallèle au rebord du pavillon du véhicule, le dispositif comportant un support, apte à prendre appui sur une paroi de référence du véhicule automobile et muni d'une rampe crantée, ainsi qu'un poussoir mobile, muni d'un butoir dont le profil cranté s'engage avec ladite rampe. Ce dispositif se caractérisé en ce que dans le support est pratiquée une lumière parallélépipèdique dont l'axe longitudinal fait avec l'axe longitudinal du support un angle égal à celui de la pente de la rampe crantée située en avant de la lumière et adjacente à la base inférieure de celle-ci, le côté du butoir opposé au profil cranté étant conformé en butée flexible prenant appui contre le bord inférieur du vitrage lorsque le poussoir mobile circule, au moyen d'un pion élastique, dans la lumière parallélépipèdique.

Selon une réalisation préférentielle, la butée flexible du butoir est formée par une languette semi-rigide délimitée par un découpe du butoir.

Selon une autre caractéristique de réalisation, le pion élastique possède un pied dont le profil est complémentaire de celui de la base inférieure de la lumière parallélépipèdique et qui est muni, du côté opposé audit pied d'une lame ressort agencée pour exercer sur la face supérieure de la lumière une force tendant à maintenir le pion en appui dans celle-ci.

On précisera encore que le poussoir comporte un élément de retenue verticale disposé transversalement à la lumière parallélépipèdique en appui sur la face arrière du support.

De façon caractéristique, le support comporte une feuillure longitudinale ouverte dans sa face arrière faisant avec le plan du vitrage un angle égal à celui que fait avec ledit plan la paroi de référence, sur le chant de laquelle ladite feuillure est engagée.

On notera encore que la face avant du support comporte un profilé, de préférence souple, disposé en avant de la butée flexible du butoir, sur lequel est appuyée la face interne du vitrage.

Mais d'autres caractéristiques et avantages de l'invention apparaîtront à la lecture de la description qui va suivre faisant référence aux dessins annexés dans lesquels :
- la figure 1 est une vue en élévation de l'avant d'un véhicule automobile en phase de montage de son pare-brise,
- la figure 2 est une vue de face d'un dispositif de positionnement selon l'invention,
- la figure 3 est une coupe selon ZZ de la figure 1,
- la figure 4 est une vue de face du poussoir,
- la figure 5 est une vue partiellement arrachée du poussoir monté dans son support,
- la figure 6 est une vue partielle d'une traverse de caisse de véhicule automobile servant de paroi de référence.

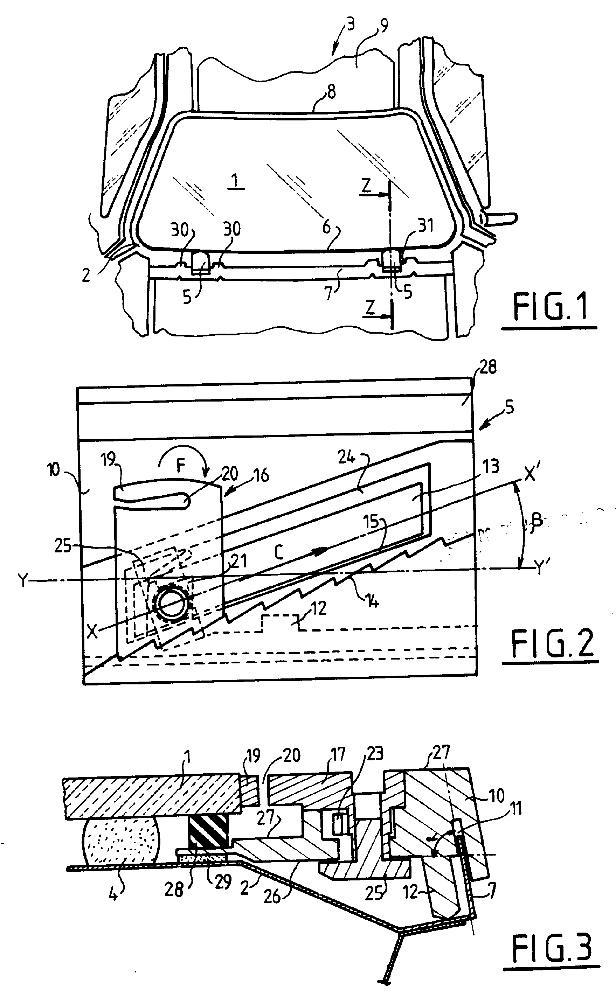

Ainsi que le montre la figure 1, un pare-brise 1 est monté en appui sur le pourtour extérieur 2 d'une baie ouverte dans la caisse 3 d'un véhicule automobile en cours de montage. Comme on l'a décrit dans le préambule, un cordon de colle 4, visible sur la figure 3, est déposé entre la tôle du pourtour 2 de la baie et la face inférieure du pare-brise 1. On conçoit que, durant le temps de polymérisation de la colle, le pare-brise, qui n'est pas encore fermement assujetti, peut subir de légers déplacements, sous l'action de son seul poids ou de forces extérieures, ceci entraînant des défauts sur l'aspect final de son montage. C'est pourquoi on applique contre son bord inférieur 6 des dispositifs de positionnement ou cales 5 prenant appui sur une paroi de référence, constituée ici par la traverse 7 de la caisse 3, de façon à exercer une poussée sur ledit bord inférieur 6 et maintenir ainsi le pare-brise parfaitement parallèle au rebord 8 du pavillon 9.

On va maintenant décrire en détail la cale 5. En se reportant aux figures 2 et 3, on voit qu'elle comporte un support 10 dans lequel est pratiquée une feuillure longitudinale 11 qui vient chausser le chant de la traverse 7, comme le montre la figure 3. Une butée 12 poussée perpendiculairement sur la face arrière 26 du support 10 vient en appui sur la paroi du pourtour 2 de la baie pour assurer un positionnement en hauteur de la cale. On voit bien également sur la figure 3, que la feuillure 11 est inclinée par rapport au plan du pourtour de la baie du même angle α que la traverse 7. De cette façon on s'assure que le plan de la cale 5 est bien parallèle au plan dudit pourtour et donc à la surface du pare-brise. Ainsi, il suffira encore de modifier l'angle α de la feuillure 11 pour pouvoir utiliser une paroi de référence différemment inclinée.

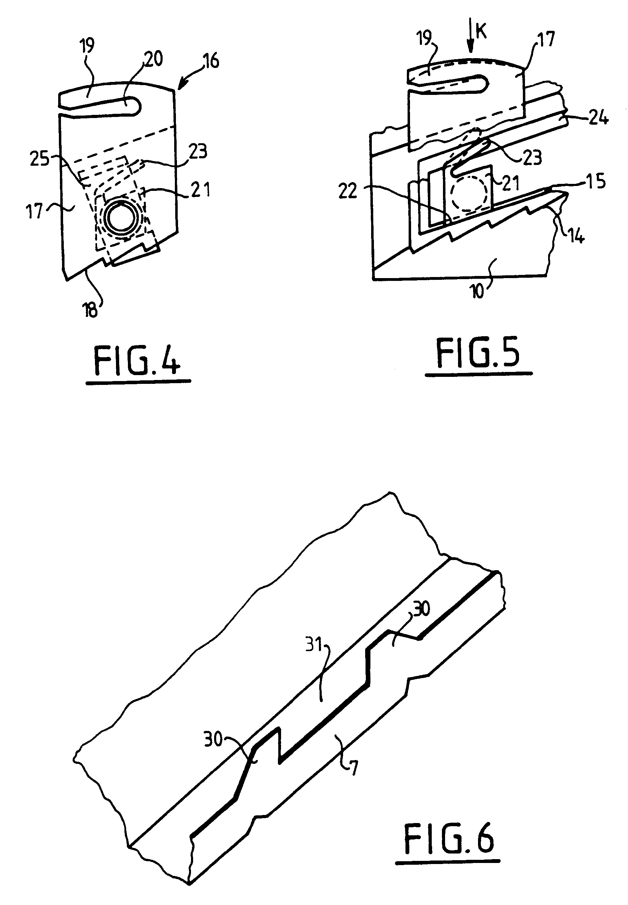

Dans le support 10 est pratiquée une lumière 13 parallélépipèdique dont l'axe longitudinal XX' fait avec l'axe longitudinal YY' du support un angle β identique à celui de la pente d'une rampe crantée 14 située en avant de la lumière 13 et adjacente à la base inférieure 15 de celle-ci. Un poussoir mobile 16 est monté dans le support 10, il est composé d'un butoir 17 dont l'une des faces présente un profil cranté 18 complémentaire de celui de la rampe 14, comme on peut le voir sur les figures 2 et 4. Le côté opposé du butoir 17 est taillé en forme de languette 19, délimitée par une découpe 20 du corps du butoir qui procure une flexibilité suffisante pour permettre un déplacement de la languette sous un effort K exercé par le vitrage (comme cela est représenté en traits pointillés sur la figure 5) et assurer ainsi un appui flexible du butoir 17 contre le vitrage, comme cela sera expliqué plus loin, à propos du fonctionnement du dispositif.

Le poussoir 16 porte encore un pion 21 solidaire de la face arrière du butoir 17 qui, comme on le voit bien sur la figure 5 où une partie dudit butoir a été enlevée, possède un pied 22 conformé pour se déplacer le long de la base inférieure 15 de la lumière 13. Du côté opposé, le pion 21 porte une lame ressort 23, rapportée ou venue de moulage. Sur la figure 5 cette lame est représentée, en pointillés à l'état libre et en traits pleins à l'état comprimé sous la face supérieure 24 de la lumière 13. Dans cette dernière position, la lame ressort 23 exerce sur le pion 21, une force tendant à le maintenir dans la lumière 13 et, sur le butoir 17 un force tendant à maintenir son profil cranté 18 dans la rampe 14.

Le poussoir 16 est maintenu verticalement en place dans le support 10 par un élément de retenue 25 disposé transversalement à la lumière 13, en appui sur la face arrière 26 du support 10 (figure 3).

Le support 10 comporte encore sur sa face avant 27 (figure 2 et 3), en avant de la butée flexible 19 du butoir 17, un profilé 28 réalisé de préférence en matériau amortisseur souple, dont la hauteur h est choisie en fonction du positionnement en profondeur que l'on veut donner au vitrage 1, dont la face interne est posée sur lui. En outre, une bande d'adhésif double face 29 est collée sur la paroi arrière 27 du support 10, elle vient au montage se fixer par sa seconde face sur le pourtour 2 de la baie.

Comme on le voit sur les figures 1 et 6, la traverse 7 comporte des saillies 30 délimitant deux à deux une encoche 31 dans laquelle chaque cale 5 est maintenue latéralement.

On va maintenant décrire la mise en oeuvre et le fonctionnement du dispositif de positionnaient.

Sur la figure 1, le pare-brise 1 est maintenu par deux cales 5, sans que ce nombre soit limitatif. Elles sont montées sur la traverse 7, dans les encoches 31, de façon que la feuillure 11 soit chaussée sur le chant de ladite traverse et que la butée verticale 12 soit au contact de la tôle formant le pourtour 2 de la baie. La seconde face de la bande adhésive 29 est collée sur ledit pourtour pour réaliser un maintien supplémentaire et éviter un déplacement du support 10 dû à un éventuel couple de rotation provoqué par la réaction du vitrage sur le poussoir 16 lorsque celui-ci est en appui sur lui. Un cordon de colle 4 est déposé tout autour de la baie et le vitrage 1 est placé au contact de celui-ci en appui sur le profilé 28 dont la hauteur h est calculée pour correspondre au volume optimum du cordon de colle.

Lorsque le pare-brise et le support 10 sont ainsi mis en place, l'opérateur bascule le poussoir 16 dans le sens de la flèche F indiquée sur la figure 2, de façon à dégager les crans 18 du butoir 17 de la rampe crantée 14 et la lame ressort 23 du contact de la face supérieure 24 de la lumière 13. Le poussoir 16 ainsi libéré, il est facile de le faire circuler dans la lumière 13, selon la flèche C jusqu'à ce que la languette 19 soit au contact du bord inférieur 6 du vitrage. En basculant le poussoir 16 en arrière ( en sens inverse de la flèche F) les crans 18 sont de nouveau engagés dans la rampe 14 et le ressort 23 est en appui dans le fond de la lumière 13, assurant le maintien en position du poussoir 16, lequel ne peut plus se dégager de la position adoptée grâce à la retenue formée par le surfaces crantées en contact.

Le dispositif tel qu'il vient d'être décrit peut-être laissé à demeure sur le véhicule pour permettre un éventuel remplacement du vitrage ou bien être enlevé après la fin de la phase de collage du vitrage. Son installation ou son enlèvement se faisant aisément puisqu'il ne nécessite aucun perçage de la tôle. Son utilisation n'est, bien entendu, nullement réservée à la pose d'un pare-brise mais peut être étendue à celle de tout autre vitrage assemblé par collage, notamment les vitres arrières des véhicules automobiles.

## Revendications

1. Dispositif de positionnement ajustable d'un vitrage (1) dans une baie de véhicule automobile, du type destiné à être appliqué contre le bord inférieur (6) dudit vitrage (1) pour exercer une poussée tendant à maintenir le bord supérieur de celui-ci parallèle au rebord (8) du pavillon (9) du véhicule, le dispositif comportant un support (10), apte à prendre appui sur une paroi de référence du véhicule automobile et muni d'une rampe crantée (14), ainsi qu'un poussoir mobile (16), muni d'un butoir (17) dont le profil cranté (18) s'engage avec la rampe (14),
caractérisé en ce que, dans le support (10) est pratiquée une lumière parallélépipèdique (13) dont l'axe longitudinal fait avec l'axe longitudinal du support (10) un angle égal à celui de la pente de la rampe crantée (14) située en avant de la lumière (13) et adjacente à la base inférieure (15) de celle-ci, le côté du butoir (17) opposé au profil cranté (18) étant conformé en butée flexible (19) prenant appui contre le bord inférieur du vitrage (1), lorsque le poussoir mobile (16) circule, au moyen d'un pion élastique (21), dans la lumière parallélépipèdique (13).

2. Dispositif selon la revendication 1,
caractérisé en ce que la butée flexible du butoir (17) est formée par une languette (19) semi-rigide délimitée par une découpe (20) du corps du butoir.

3. Dispositif selon l'une des revendications 1 ou 2,
caractérisé en ce que le pion élastique (21) possède un pied (22) dont le profil est complémentaire de celui de la base inférieure (15) de la lumière (13) et qui est muni, du côté opposé audit pied, d'une lame ressort (23) agencée pour exercer sur la face supérieure (24) de ladite lumière un force tendant à maintenir le pion (21) en appui dans celle-ci.

4. Dispositif selon l'une des revendications précédentes,
caractérisé en ce que le poussoir (16) comporte un élément de retenue verticale (25) disposé perpendiculairement à la lumière (13) en appui sur la face arrière (26) du support (10).

5. Dispositif selon l'une des revendications précédentes,
caractérisé en ce que le support (10) comporte une feuillure longitudinale (11) ouverte dans sa face arrière (26) faisant avec le plan du vitrage (1) un angle égal à celui que fait avec ledit plan la paroi de référence (7) sur le chant de laquelle ladite feuillure est engagée.

6. Dispositif selon l'une des revendications précédentes,
caractérisé en ce que la face avant (27) du support (10) comporte un profilé (28), de préférence souple, disposé en avant de la butée flexible (14) du butoir (17), sur lequel est appuyée la face interne du vitrage (1).

7. Dispositif selon l'une des revendications précédentes,
caractérisé en ce que la face arrière (26) du support (10) est muni d'une bande (29) d'adhésif double face.

8. Dispositif selon l'une des revendications précédentes,
caractérisé en ce que la paroi de référence (7) comporte des saillies (30) délimitant deux à deux une encoche (31) de maintien latéral du support (10).

## Patentansprüche

1. Einstellbare Verstellvorrichtung einer Glasscheibe (1) in einem Fahrzeugrahmen, von der Art die dazu dient, gegen den unteren Rand (6) des Fensters (1) gedrückt zu werden, um einen Druck auszuüben, der den oberen Rand von diesem parallel hält zum Rand (8) des Dachs (9) des Fahrzeugs, wobei die Vorrichtung einen Träger (10) aufweist, der geeignet ist, sich auf einer Referenzseitenwand des Kraftfahrzeugs abzustützen, und mit einer Rastenrampe (14) versehen ist, sowie mit einem beweglichen Drücker (16), der mit einem Anschlag (17) versehen ist, dessen gezahntes Profil (18) in Eingriff steht mit der Rampe (14),
dadurch gekennzeichnet, daß in dem Lager (10) eine parallelepipedische Ausnehmung (13) ausgebildet ist, deren Längsachse mit der Längsachse des Lagers (10) einen Winkel einschließt, der gleich jenem der Neigung der Rastenrampe (14) ist, die vor der Ausnehmung (13) und in der Nähe der unteren Basis (15) von dieser angeordnet ist, wobei die dem gezahnten Profil (18) entgegengesetzte Seite des Anschlags (17) als biegsames Anschlagende (19) ausgebildet ist, das sich gegen den unteren Rand des Fensters (1) abstützt, wenn der bewegliche Drücker (16) mit Hilfe eines elastischen Pions (21) in der parallelepipedischen Ausnehmung (13) zirkuliert.

2. Vorrichtung nach Anspruch 1, dadurch gekennzeichnet, daß das biegsame Anschlagende des Anschlags (17) durch eine halbsteife Zunge (19) gebildet wird, die durch einen Ausschnitt (20) des Anschlagkörpers begrenzt wird.

3. Vorrichtung nach Anspruch 1 oder 2, dadurch gekennzeichnet, daß der elastische Pion (21) einen Fuß (22) aufweist, dessen Profil komplementär ist zu jenem der unteren Basis (15) der Ausnehmung (13), und der auf der dem Fuß gegenüberliegenden Seite mit einer Blattfeder (23) versehen ist, die angeordnet ist, um auf die obere Seite (24) der Ausnehmung eine Kraft auszuüben, die dazu führt, den Pion (21) in Andruck in dieser zu halten.

4. Vorrichtung nach einem der vorhergehenden Ansprüche, dadurch gekennzeichnet, daß der Drücker (16) ein vertikales Rückhalteelement (25) aufweist, das senkrecht zur Ausnehmung (13) angeordnet ist, in Andruck auf die Hinterseite (26) des Lagers (10).

5. Vorrichtung nach einem der vorhergehenden Ansprüche, dadurch gekennzeichnet, daß das Lager (10) eine Längsfuge (11) aufweist, die an ihrer Hinterseite (26) offen ist, wobei sie mit der Ebene der Glasscheibe (1) einen Winkel einschließt, der gleich jenem ist, den die Referenzseitenwand (7) mit der Ebene einschließt, mit deren kante die Fuge in Eingriff steht.

6. Vorrichtung nach einem der vorhergehenden Ansprüche, dadurch gekennzeichnet, daß die Vorderseite (27) des Lagers (10) ein vorzugsweise nachgiebiges Profilstück (28) aufweist, das vor dem biegsamen Anschlagende (14) des Anschlags (17) angeordnet ist, auf das die Innenseite der Glasscheibe (1) andrückt.

7. Vorrichtung nach einem der vorhergehenden Ansprüche, dadurch gekennzeichnet, daß die Hinterseite (26) des Lagers (10) mit einem Doppelklebeband (29) versehen ist.

8. Vorrichtung nach einem der vorhergehenden Ansprüche, dadurch gekennzeichnet, daß die Referenzseitenwand (7) Vorsprünge (30) aufweist, die paarweise eine Kerbe (31) zum seitlichen Halten des Lagers (10) begrenzen.

## Claims

1. An adjustable device for positioning a window (1) in a structural opening of a motor vehicle, of the type intended to be applied against the lower edge (6) of said window (1) so as to exert a thrust tending to hold the upper edge of the latter parallel to the rim (8) of the roof (9) of the vehicle, the device comprising a support (10), suitable for bearing against a reference wall of the motor vehicle and provided with a toothed ramp (14), as well as a mobile thruster (16), provided with a stopping device (17), the toothed profile (18) of which engages with the ramp (14),
characterised in that there is made in the support (10) a parallelepipedic slot (13), the longitudinal axis of which forms with the longitudinal axis of the support (10) an angle equal to that of the slope of the toothed ramp (14) located forward of the slot (13) and adjacent to the lower base (15) of the latter, the side of the stopping device (17) opposite the toothed profile (18) being shaped as a flexible limit stop (19) bearing against the lower edge of the window (1), when the mobile thruster (16) travels, by means of a resilient slug (21), inside the parallelepipedic slot (13).

2. A device according to Claim 1,
characterised in that the flexible limit stop of the stopping device (17) is formed by a semi-rigid tongue (19) delimited by a cut-out (20) from the body of the stopping device.

3. A device according to one of Claims 1 or 2,
characterised in that the resilient slug (21) has a foot (22), the profile of which is complementary to that of the lower base (15) of the slot (13) and which is provided, on the side opposite said foot, with a leaf spring (23) arranged so as to exert on the upper face (24) of said slot a force tending to hold the slug (21) resting inside the latter.

4. A device according to one of the preceding claims,
characterised in that the thruster (16) comprises a vertical holding element (25) arranged perpendicular to the slot (13) bearing against the rear face (26) of the support (10).

5. A device according to one of the preceding claims,
characterised in that the support (10) comprises a longitudinal rebate (11) open in its rear face (26) forming with the plane of the window (1) an angle equal to that made with said plane by the reference wall (7), on the edge of which said rebate is engaged.

6. A device according to one of the preceding claims,
characterised in that the front face (27) of the support (10) comprises a profile (28), preferably flexible, arranged in front of the flexible limit stop (14) of the stopping device (17), on which the inner face of the window (1) rests.

7. A device according to one of the preceding claims,
characterised in that the rear face (26) of the support (10) is provided with a strip (29) of double-sided adhesive.

8. A device according to one of the preceding claims,
characterised in that the reference wall (7) comprises projections (30) delimiting in twos a lateral holding recess (31) of the support (10).
